# EUROPEAN PATENT APPLICATION

(11) **EP 1 811 719 A1**
(43) Date of publication of application: **25.07.2007**
(21) Application number: 06250371.9
(22) Date of filing: 24.01.2006
(51) Int. Cl.: H04L 12/28, H04Q 7/38

(54) **Internetwork key sharing**

(71) Applicant: BRITISH TELECOMMUNICATIONS public limited company, London EC1A 7AJ (GB)
(72) Inventor: The designation of the inventor has not yet been filed
(74) Representative: Lau, Chi-Fai

(57) **Abstract**

Securing communications within a wireless home network, such as a WiFi network, is presently a complex process requiring manual input of encryption keys by a user. Such inputting is subject to human error. Another problem in that this key is also associated with all other devices in the WiFi network, and not unique to the new device attaching to the network. Thus, if the device is stolen or lost, the key may be compromised for the entire network. The present invention provides for a method of deriving encryption keys for securing communications between devices in a home network, such as a WiFi network, from elements in a mobile network, which already have access to shared keys. Further encryption keys are derived from those already generated within the mobile network and made available to the devices in the home network.

## Description

### Field of the Invention

This invention relates to a method of sharing a key in communications network, in particular a method of providing encryption keys to a home communications network by based on key generation in a mobile cellular network.

### Background to the Invention

Security in communication systems has always been important and mobile cellular communication systems have been no different. In early "first generation" analogue mobile phone systems, a third party could eavesdrop on the communications between a mobile terminal and the mobile network fairly easily over the radio interface. These problems were partly mitigated when "second generation" digital systems, such as GSM (Global System for Mobile communications), were adopted by mobile operators.

Security provisions, including authentication, under GSM are based upon a key sharing principle, where a smart card (a SIM card) is used to store a secret key that is been preloaded onto the card when the card is made. The secret key is thus shared *a priori* between the mobile phone and the network operator before any communication is initiated. The secret key forms the basis for all subsequent key generation used for authentication and ciphering. However, there are shortfalls in the GSM security provisions that means it is not completely secure.

Under UMTS (Universal Mobile Telecommunications System), one of the "third generation" (3G) mobile communication systems, security provisions are based loosely on those under GSM, but with further enhancements. As in GSM, under UMTS a smart card (USIM) is used to store identification and security information, which includes the subscriber ID and a secret key K. This information enables a subscriber to connect with the network and make/receive calls securely. The method of authentication in UMTS using derived keys from this initial secret key is performed under the AKA (Authentication and Key Agreement) protocol. The security provisions in UMTS, including the AKA protocol, are set out in greater detail in 3GPP TS 33.102.

The process of mutual authentication between the HSS (Home Subscriber Server) of the home network, and the subscriber's USIM (universal subscriber identity module), is based on showing knowledge of the shared key K, which is made available only to the USIM and the HSS. During an authentication request phase, the HSS generates an authentication vector including a random number RAND and a network authentication token AUTN based on the shared key K. The random number RAND and the authentication token AUTN are transmitted to the subscriber's mobile terminal, or specifically the USIM, which checks AUTN to authenticate the HSS and network, and then calculates an authentication response RES using a fixed algorithm using RAND as a seed and the shared key K. The response RES is transmitted back to the HSS and if RES is equal to the response expected by the HSS based on its calculations, then authorisation is completed and the USIM and the HSS will generate session keys, which can be used for data encryption and decryption during subsequent communications.

This architecture utilising AKA protocol between the HSS and the USIM is a very valuable asset to network operators. This infrastructure can be leveraged to enable application functions in the network to establish shared keys and authenticate users. These application functions or servers can reside anywhere in the home network or a visited network. The protocol that has been adopted to allow a network operator to provide the "boot-strapping" of application security to authenticate a subscriber is set out in GAA (Generic Authentication Architecture). GAA is described in more detail in 3GPP TS 33.220.

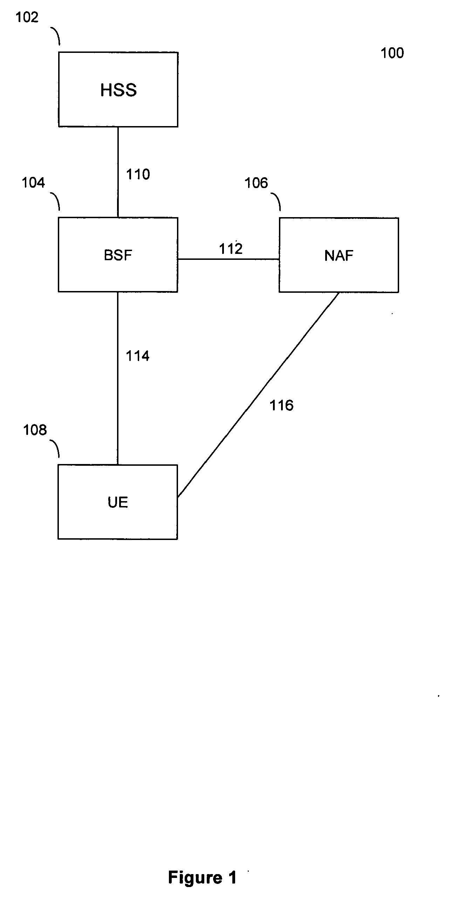

Figure 1 illustrates a simple network model 100 using the bootstrapping approach defined under GAA. Network 100 comprises an HSS 102, a BSF (bootstrapping server function) 104, a NAF (network application function) 106 and a UE (user equipment) 108. In network 100, the NAF 106, which is typically a service provider, and UE 108 are trying to authenticate each other and generate a session key to secure subsequent communications. The NAF 106 may provide services such as secure mail, electronic commerce and payment, access to a corporate network and such like.

In network 100, when the NAF 106 requires authentication of the UE 108, it does not need to make any request directly to the HSS, but instead uses the BSF 104. The BSF 104 acts as an intermediary authentication server and authenticates the UE 108 on behalf of the NAF 106, and also provides the necessary session keys.

As under the standard AKA protocol, authentication is based on an authentication vector sent by the HSS 102 to the BSF 104. The authentication vector includes challenge-response information based on the shared key K held at the HSS 102 and the USIM in the UE 108. The authentication vector also includes the two keys: a cipher key CK and an integrity key IK. These keys are generated only by the HSS 102 and can essentially be considered to be session keys used to secure communications following authentication. The authentication vector, and in particular, the challenge response information is used by the BSF 104 to authenticate the UE 108. In practice, the BSF 104 may request more than one authentication vector at any one time, and thus reduce the number to requests that have to be made to the HSS 102. There may also be further BSFs connected to the HSS 102.

However, the BSF 104 can only hold a limited number of authentication vectors and when these have all been used, the BSF 104 will need to request further authentication vectors from the HSS 102. In practice, the number of authentication vectors is expected to be between 1 and 32, with 2 to 4 being the most common. As such, whilst there are sound commercial reasons why the use of BSFs is advantageous, as well as technical ones related to reducing traffic at the HSS 102 from multiple requests from NAFs, the use of BSFs does not completely address the technical problem of reducing traffic at the HSS 102. Indeed, it is likely that as subscribers demand more services from the network, the number of NAFs providing those services will only increase with time, and thus the number of requests for authentication vectors at the HSS 102 by the BSF 104, and other BSFs, will inevitably increase as well. It is envisaged that whilst the current use of BSFs and GAA does alleviate the amount of authentication traffic experienced by the HSS 102, over time, there will come a point when the current system will cease to function efficiently due to problems caused by traffic overload.

Furthermore, the use of GAA as currently envisaged only extends the authentication process within the control of the mobile operator. The inventor has identified ways in which a system such as GAA could be extended and modified to cover more extensive applications.

For example, authentication within home networks with wireless connections, such as in WiFi networks, is presently a complex process requiring manual input of encryption keys by a user, which is subject to input errors. In the example of a home WiFi network, a user who wishes to connect his PDA or other device securely to the network must determine the encryption key that is being used by the WiFi network. That key must be inputted into the device. Aside from the problem of input errors, there is another problem in that this key is also associated with all other devices in the WiFi network, and not unique to the new device attaching to the network. Thus, if the device is stolen or lost, the key may be compromised for the entire network.

### Summary of the Invention

It is the aim of embodiments of the present invention to address one or more of the above-stated problems.

According to one aspect of the present invention, there is provided a method of key sharing between a mobile network and a home network, wherein the mobile network comprises a first authentication entity and a second authentication entity, and wherein the home network comprises a first network entity and a second network entity, the method comprising the steps of:
(i) directing a request for an encryption key from at least one network entity in the home network to the mobile network;
(ii) generating a first encryption key in the mobile network at the first authentication entity and separately generating a second encryption key at the second authentication entity, wherein the first and second generated encryption keys are identical;
(iii) providing the first network entity with a third encryption key derived from the first encryption key generated at the first authentication entity, and providing the second network entity with a fourth encryption key derived from the second encryption key generated at the second authentication entity, wherein the third encryption key at the first network entity and the fourth encryption key at the second network entity are identical.

This process of sharing keys between two network types is particularly advantageous as it allows the home network to independently manage its keys so that communication load on the authentication server in the mobile cellular network is reduced. Furthermore, once the initial set-up has been done, the home network can operate without the need for any intervention from the second authentication entity, specifically a mobile terminal and a USIM.

The third encryption key and the fourth encryption key can be used to secure communications between the first network entity and the second network entity within the home network.

Preferably, the home network is a wireless fixed line network and the communications between the first network entity and the second network entity is over a wireless interface secured using the third and fourth encryption keys. The first network entity may be a router, such as a home hub, or a device connected to a router. The first authentication entity may comprise a home subscriber server and the second authentication entity may comprise a user equipment such as a mobile terminal.

Preferably, the generating of the first and second encryption keys is based on a common secret held separately at both the first authentication entity and the second authentication entity. Furthermore, the generating of the first and second encryption keys may be further based on a seed shared between the first and second authentication entities, and the generating of the first and second encryption keys uses a predetermined key generation algorithm.

Typically, the first authentication entity and second authentication entity are associated with the mobile network, and the first network entity and the second network entity are associated with the home network.

The third encryption key may be derived by the first authentication server and the fourth encryption key may be derived by the second authentication entity.

In embodiments of the present invention, if the further encryption keys in the home network are compromised, for example if a device is lost or stolen, then security in the entire network is not at risk as the further encryption keys can be generated on device by device basis where different keys can be generated for each communications channel in the home network.

The whole system also supports configuration portability and remote access as the home network does not have to be tied to any specific location in relation to the mobile network.

### Brief Description of the Drawings

For a better understanding of the present invention reference will now be made by way of example only to the accompanying drawings, in which:
Figure 1 is a simple network diagram incorporating bootstrapping;
Figure 2 is a message flow diagram illustrating bootstrapping;
Figure 3 is a network diagram illustrating an arrangement in an example of the present invention;
Figure 4 is a message flow diagram of an example of the present invention;
Figure 5 is a network diagram of another example of the present invention with recursive authentication on the user equipment side;
Figure 6 is a network diagram of an example of the present invention applied to the user's home environment.
Figure 7 is a network diagram showing the separation of network types in an example of the present invention.

### Description of Preferred Embodiments

The present invention is described herein with reference to particular examples. The invention is not, however, limited to such examples.

Figure 1 illustrates a simple 3G network 100 employing bootstrapping. The network 100 comprises a HSS (home subscriber server) 102, a BSF (bootstrapping server function) 104, a NAF (network application function) 106 and a UE (user equipment) 108. In the network 100, the BSF 104 and the UE 108 mutually authenticate each other using the AKA protocol. Session keys are agreed and are applied to communications between the UE 108 and the NAF 106. The NAF 106 may be a service provider, providing services such as secure mail, electronic commerce and payment, access to a corporate network and such like. The UE 108 may be any suitably configured device such as a mobile phone, a PDA or a laptop. The UE 108 contains a USIM (user subscriber identity module) which securely holds information relating to the user, such as the subscriber identity and authentication keys.

A person skilled in the art will recognise that other elements such as gateways, radio network controllers and other network elements may be found in the network 100. However, these elements have been omitted for the sake of simplicity.

The HSS 102 and the BSF 104 are located in the home mobile network of the UE 108. The NAF 106 may be located in the home mobile network of the UE 108 or in a visited mobile network. The HSS 102 and the BSF 104 can communicate over communications link 110. The BSF 104 and the NAF 106 can communicate over communications link 112. Communications links 110 and 112 are typically secure wired connections. The BSF 104 and the NAF 106 can communicate with the UE 108 over communications links 114 and 116 respectively. The communications links 114 and 116 usually includes at least in part a wireless air interface.

Authentication of the UE 108 and the network has to take place before secure communications between elements in the network and the UE 108 can take place. Note, insecure communications can occur before authentication is completed. Communications may be between the UE 108 and another device attached to the network, such as another user device, or an application server such as the NAF 106. Authentication is important for ensuring the integrity of the parties involved before communications start and also provides for the agreement, and exchange where appropriate, of keys for the encryption of data in the subsequent communications. The use of encryption keys is particularly important in the network when communications to and from the UE 108 are over a non-secure channel, either wholly or in part. In the network 100, communications link 114 and 116 may be wireless air interfaces, which are particularly susceptible to interceptions by third parties and must therefore be secured.

Authentication in the network is based on a shared secret key K, securely held on the USIM and the AuC (authentication centre) in the user's home network. The USIM takes the form of a smart card that is found in the UE 108, and the AuC is usually part of or connected to the HSS 102. For the sake of simplicity, the AuC and the HSS shall be referred to as a single combined entity, the HSS 102. Thus, before authentication begins, only the HSS 102 and the UE 108 have access to the shared key K.

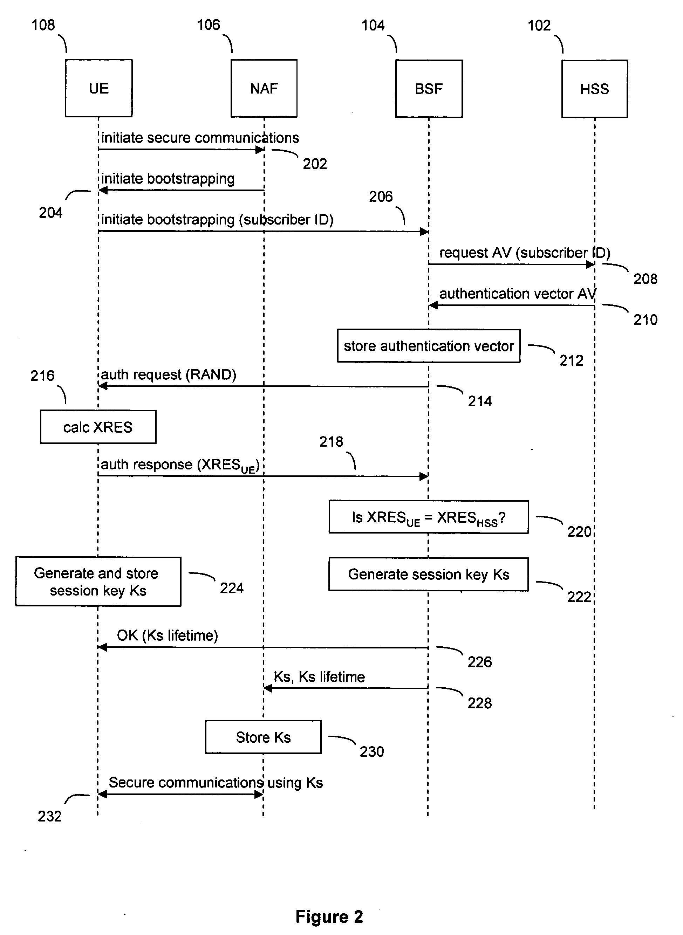

The method of authentication in the network 100 will now be described with reference to Figure 2, with references to the elements found in Figure 1 made using like reference numerals.

Authentication between the UE 108 and the NAF 106 is initiated by the UE 108 sending a message to start communications in step 202. The NAF 106 sends a message back to the UE 108 to initiate bootstrapping as shown in step 204. Alternatively, the NAF 106 may initiate communications directly by omitting step 202, and starting communications directly with step 204.

The UE 108 then sends a message to initiate bootstrapping, which includes the subscriber ID of the USIM, to the BSF 104 in step 206. In step 208, the BSF 104 then sends a request message to the HSS 102 to retrieve at least one authentication vector AV corresponding to the subscriber ID received. The authentication vector AV is generated by the HSS 102 and includes a random number RAND, an expected response XRES_{HSS} with which the BSF 104 can use to authenticate the UE 108, as well as some cipher and integrity keys, CK and IK, which are derived from the shared key K. The expected response XRES_{HSS} is derived by the HSS from the generated random number RAND and the shared key K stored at the HSS using a predetermined algorithm. CK and IK are used later to generate session keys, or may themselves be used directly as session keys.

The authentication vector AV is sent from the HSS 102 to the BSF 104 in step 210 and then stored by the BSF 104 in step 212.

The HSS 102, may send more than one AV to the BSF 104. Thus, steps 208 to 212 may be omitted if the BSF 104 already holds at least one AV corresponding to the UE 108.

To authenticate the user, the BSF 104 sends the UE 108 the random number RAND in an authentication request message in step 214. In step 216, the UE then calculates an expected response based on the received random number RAND and the shared key K held by the USIM at the UE 108 using a predetermined algorithm. The expected response XRES_{UE} calc ulated by the UE 108 is sent in an authorisation response message to the BSF 104 in step 218.

Once the BSF 104 receives the authorisation response message, BSF 104 checks the stored XRES_{HSS}, sent as part of the authorisation vector AV from the HSS 102, with the XRES_{UE} received from the UE 108, in step 220. If the values of XRES_{HSS} and XRES_{UE} match, then the UE 108 is authorised and the BSF 104 generates a session key Ks in step 222. The session key Ks is generated based on the shared key K held by the HSS 102 using a suitable key generating algorithm, and may be derived from the keys passed to the BSF 104 in the authentication vector AV. Similarly, the UE 108 also generates a session key Ks based the shared key K stored on the USIM and stores that session key Ks in a secure module on the UE 108 or on the USIM in step 224. Thus, the UE 108 and the BSF 104, after authentication, now share identical session keys Ks.

The BSF 104 then sends an OK response message to the UE 108 in step 226, which may include an indication of the lifetime of the session key Ks. In step 228, the BSF 104 then sends the session key Ks and the session key lifetime to the NAF 106. The NAF 106 and the UE 108 now share the same session key Ks with which they can encrypt data to enable secure communications between each other in step 232. If the key lifetime is used, then the session key Ks will be discarded after this lifetime. After this lifetime, any further communications should continue only after a repeated authentication process and generation of a new session key Ks.

Keys can be derived from an original key by one or more of the following methods: by selecting parts of the original key, by concatenating several keys, by applying the one-way (hash) function, by applying some logical conversions such as XOR or by applying cryptographic algorithms (e.g. DES) to the original key. A person skilled in the art will appreciate that other methods are also possible. The 3G specification does not mandate any specific functions for key derivation as long as the same function is used by both the HSS 102 and UE (or more specifically the USIM) 108.

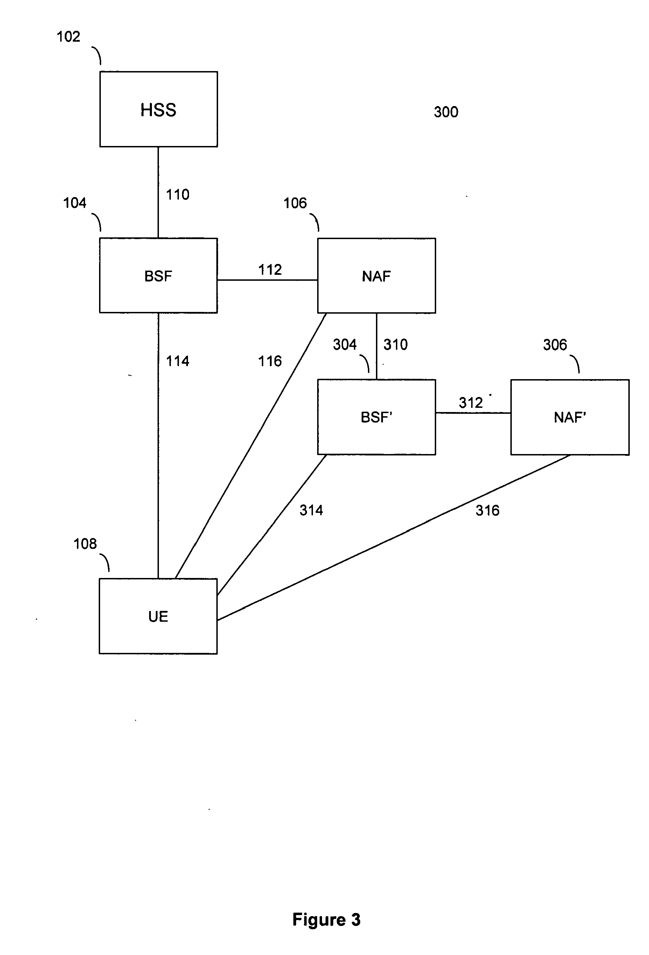

Figure 3 illustrates a network 300 in an example of the invention. The network 300 includes all the elements from Figure 1: the HSS 102, the BSF 104, the NAF 106 and the UE 108. The network 300 also includes the further elements of a BSF' 304 and a NAF' 306. The BSF' 304 is connected to the NAF 106 via communications link 310, and to the NAF' 306 via communications link 312. The BSF' 304 and NAF 306 are also connected to UE 108 over communications link 314 and 316 respectively. The communications links 314 and 316 may include at least in part a wireless radio interface.

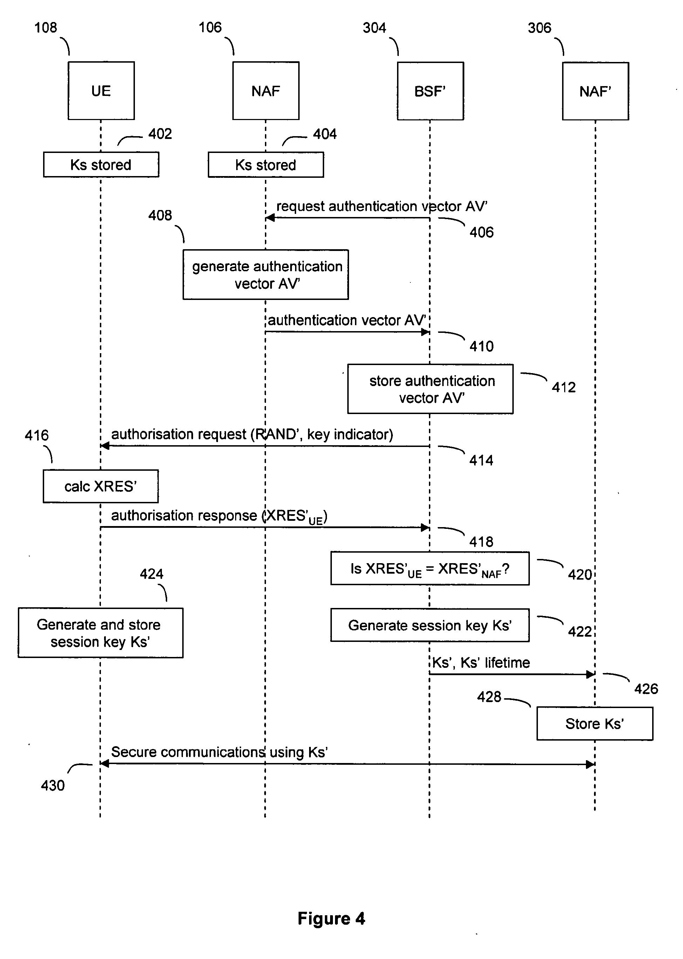

The operation of the example of the invention in Figure 3 will now be described with reference to Figure 4.

Figure 4 is a message flow diagram illustrating the process of key exchange between the BSF' 304, the NAF' 306 and the rest of the network 300. Firstly it is assumed that the NAF 106 and the UE 108 both hold a session key Ks enabling them to communicate with each other securely. The session key Ks is assumed to have been derived from a secret key K held at the UE 108 and the HSS 102, for example by following some or all of the steps shown in Figure 2. The storage of the session key Ks is shown in step 402 and 404 of Figure 4. Note that specifically, the session key Ks stored at the UE 108 can in practice be stored on the USIM in the UE 108.

In this example of the invention, when the further NAF' 306 requires authentication and key agreement with the UE 108, it does not make a request to the BSF 104, but makes a request the further BSF, BSF' 304, with an indication of the UE 108 it is attempting to authenticate and establish secure communications with. The BSF' 304 then sends a request message to the NAF 106 in step 406 to retrieve at least one authentication vector AV' corresponding to the UE 108. An authentication vector AV' is generated by the NAF 106 in step 408, which includes a random number RAND', an expected response XRES'_{NAF} with which the BSF' 304 can use to authenticate the UE 108, as well as some cipher and integrity keys which are derived from the stored session key Ks. The expected response XRES'_{NAF} is derived by the NAF 106 from the generated random number RAND and the session key Ks stored at the NAF using a suitable algorithm.

The authentication vector AV' is sent from the NAF 106 to the BSF 304 in step 410 and then stored by the BSF' 304 in step 412.

The connection 312 between NAF' 306 and BSF' 304 is established a priori, so that NAF' 306 is always aware of which BSF' 304 it should submit its authentication requests to. Furthermore, the connection 312 is likely to be secured as it is used to convey sensitive information such as key Ks.

To authenticate the user, the BSF' 304 sends the UE 108 the random number RAND' and an indication that the authentication process is based on the previously generated session key Ks and not the shared key K. This indication may take the form of a simple flag or marker in the message. The random number RAND' and key indicator are sent in an authentication request message in step 414. In step 416, the UE 108 calculates an expected response XRES'_{UE} based on the received random number RAND' and the stored session key Ks using a suitable algorithm. The expected response XRES'_{UE} calculated by the UE 108 is sent in an authorisation response message to the BSF' 304 in step 418.

Once the BSF' 304 receives the authorisation response message, the BSF' 304 checks the stored XRES'_{NAF}, sent as part of the authorisation vector AV' from the NAF 106, with the XRES'_{UE} received from the UE 108, in step 420. If the value for XRES'_{NAF} and XRES'_{UE} match, then the UE 108 is authorised and the BSF' 304 generates a further session key Ks' in step 422. The session key Ks' is generated based on the session key Ks stored at the NAF 106 using a suitable key generating algorithm. The cipher and integrity keys sent by the NAF 106 in the authentication vector AV', may be used as the session key Ks' or Ks' may be generated from the cipher and integrity keys, such as by concatenation or other method described previously. Similarly, the UE 108 also generates a session key Ks' based the stored session key Ks at the UE 108 in step 424. Thus, the UE 108 and the BSF' 304, after authentication, now share identical session keys Ks'.

The BSF' 304 then sends the newly generated session key Ks', and optionally a session key lifetime, to the NAF' 306. The NAF' 306 and the UE 108 now share the same session key Ks' with which can be used to encrypt data to enable secure communications between each other in step 230. If the key lifetime is used, then the session key Ks' will be discarded after this lifetime. Any further communications can then only continue after a repeated authentication process and generation of a new session key Ks'.

The timing of when Ks' is generated by the UE 108 and the BSF' 304 can occur at anytime during the above process, with the only requirement being that Ks' is available to the UE 108, and more specifically the USIM, as soon as authentication is completed.

In summary, as NAF 106 is in the possession of the first session key Ks that is identical with the first session key Ks held by the UE 108. Thus, the NAF 106 is able to effectively perform the function of an HSS (an HSS' of sorts) using Ks in a same manner that the HSS 102 uses the original shared secret K as a basis for authentication and generation of session keys.

In a further example of the invention, the BSF' 304 may not be needed and its functionality as outlined with reference to Figure 4 may be provided within the NAF 106. In such an arrangement, the NAF 106 can effectively act as a BSF and authenticate the UE 108 with its stored session key Ks and then generate another session key Ks', which can be transmitted directly to the NAF' 306.

Typically the HSS 102 and BSF 104 are controlled by the mobile network operator. As such, every time the NAF 106 or other application server requires authentication and secure communications with the UE 108, it must make a request to the BSF 104 as set out in Figure 2. However, by utilising the examples of the invention described, it is possible to avoid repeated requests to the BSF 104 and hence to the HSS 102 by reusing the original session key Ks supplied by the BSF 104 to the NAF 106. Thus traffic to the HSS 102 and BSF 104 are kept to a minimum and additional functionality and robustness is afforded to the NAF 106 and other elements requiring authentication with the UE 108 that are not under the direct control of the operator of the home network in which the HSS 102 and BSF 104 reside.

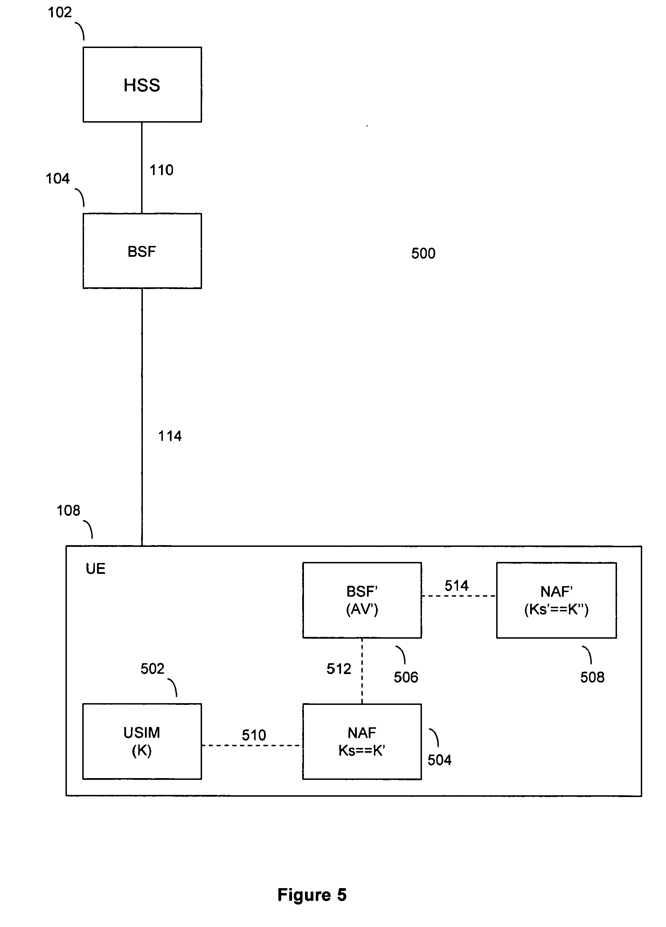

It should also be appreciated that the same recursive process described above in relation to Figure 4 could also be duplicated within the UE 108 or on the UE 108 side of the network, rather than on the core network side. Figure 5 illustrates this recursive process occurring on the UE 108 side.

In Figure 5, there is shown a network 500 comprising an HSS 102, a BSF 104, and a UE 108. However, in contrast to network 300 in Figure 3, the network 500 is configured to effect the recursive authentication process on the UE 108 side rather than on the core network side as described earlier with reference to Figures 3 and 4.

The UE 108 is shown comprising a USIM 502, a NAF 504, a BSF' 506, and a NAF' 508. The UE 108 is authenticated by the network and a session key Ks is generated for securing communications in the same way as that outlined in steps 202 to 224 described above with reference to Figures 2 and 4. The difference between this network 500 and that of the network 300 in Figure 3, is that authentication is initiated on the UE side with the UE 108 using the existing session key Ks to initiate authentication of the core network infrastructure and then using that existing session key Ks as a basis for generating a further session key Ks' with which communications can be secured between the UE 108 and the core network infrastructure.

Alternatively, the recursive process on the UE side could be used to generate a further session key Ks' that can be exported from the UE 108 to other locally attached devices, for example a PDA or multimedia player, so that the other device can communicate with the core network securely using this further session key Ks'.

The steps taken by the UE 108, and more specifically the NAF 504, BSF' 506 and NAF' 508 mirror steps 406 to 430 in Figure 4, except that the NAF 106, BSF' 304 and NAF' 306 previously residing on the core network side, now form part of, or are associated with, the UE 108. And likewise, whereas authentication is initiated in Figure 4 by the BSF' 304 on the core network side and directed towards the UE 108, in the example of Figure 5, authentication is initiated by the UE 108 and directed towards the core network, or specifically directed towards a NAF in the core network.

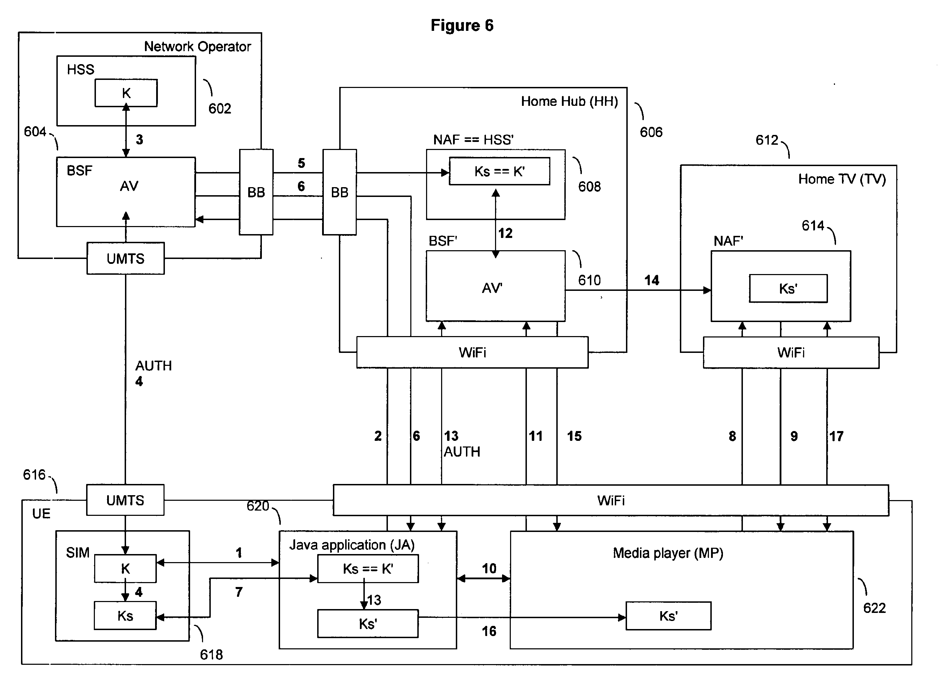

Figure 6 illustrates one specific example of the use of the process outlined in Figure 4 in combination with the arrangement of Figure 5.

Figure 6 illustrates an arrangement that might be used in a home environment comprising a HSS 602, a BSF 604, a home hub 606 comprising a NAF 608 and a BSF' 610, a home TV 612 comprising a NAF' 614, and a UE 616. The UE 616 further comprises three components: USIM module 618, a Java application JA 620 and a media player MP 622.

The HSS 602 and the BSF 604 form part of the network operator's core network, which in this example is a 3G UMTS network. A person skilled in the art will appreciate that the example is equally applicable to other types of cellular communications networks such as GSM. The BSF 604 is connected to the user's home hub 606 via suitable connection such as the broadband BB connection shown. The home hub 606 may be a broadband router or similar. The home hub 606 may also include a wireless capability such as WiFi transceiver enabling the home hub to connect to other network devices such as personal computers, laptops and PDAs wirelessly. The home hub 606 may form part of the user's home environment or home local area network, to which other devices may be attached. One example of a further device shown in Figure 5 is the home TV 612. The home local area network would typically operate according to a suitable local area network protocol such as IEEE 802.3 Ethernet or IEEE 802.11 Wi-Fi.

The home TV 612 may utilise the connection to the home hub 606 to obtain data from the internet via the broadband connection or to obtain other information from the network operator's core network. Examples of services may include video-on-demand, programming information etc. The home TV 612 may also include a Wi-Fi transceiver which can be used to connect to the home hub, although a wired connection such as an Ethernet connection may also be used, and can also be used to connect to other devices.

Both the home hub 606 and the home TV 612 are able to connect to the UE 616 and specifically the Java application and the media player 622. The UE also has a Wi-Fi transceiver with which it can connect to the home hub 606 and the home TV 612 wirelessly.

In this example, the purpose is to authenticate the media player 622 with the home TV 612 so that data, such as premium TV or music content, can be transferred from the home TV 612 to the media player 622.

The underlying principle in this example follows that outlined in Figure 4, namely that the UE and the core network are authenticated and a session key Ks is generated and shared between the NAF 608 in the home hub and the UE 616 as set out in the steps up to 404 in Figure 4. By then applying the recursive technique described in the rest of Figure 4, it is possible to authenticate and generate further session keys independently of the network operator, and specifically independently of the HSS 602 and the BSF 604.

The steps in this example will now be described with reference to the steps shown in Figure 6.
Step 1. Java application JA 620 asks USIM 618 for the identity of the user and receives the network operator-related identity. At the same time JA 620 may also read from USIM 618 information related to the location of the preferred BSF to which authentication requests must be made.
Step 2. Using Wi-Fi, although in practice GSM and other communications protocols could be used, JA 620 connects to the home hub 606, and in turn to BSF 604 via the broadband connection with a request to initiate bootstrapping using the ID passed from the USIM 618 to the JA 620. This step is equivalent to step 206 in Figure 2.
Step 3. BSF 604 requests and receives authentication vector AV from HSS 602. This step is equivalent to steps 208 and 212 in Figure 2.
Step 4. BSF 604 performs the regular authentication over UMTS with UE/USIM. The result is that the USIM generates a session key Ks, which is also provided to the BSF 604 by the HSS 602. The mechanism for authentication and Ks key generation is the same as that described in steps 214 to 224 in Figure 2.
Step 5. BSF 604 transmits Ks from the authentication vector AV to NAF 608, and optionally with a Ks lifetime, in the home hub 606 over the broadband connection. Equivalent to step 228 in Figure 2.
Step 6. BSF 604 also responds to Java application 620 that the key generation has been successful, and optionally also includes a key lifetime. This is equivalent to step 226 in Figure 2.
Step 7. Java application 620 requests and receives the Ks from USIM 618.

Following steps 1 to 7, the UE 616 and the core network are effectively bootstrapped and JA 620 and the home hub 606 have has access to Ks. Now the NAF 608 in the home hub 606 can effectively play the role of HSS' and the process continues as follows:
Step 8. Media player 622 makes a request to set up a secure session with the home TV 612, for example, to enable secure transfer of some premium TV content. The request is specifically directed to the NAF' 614 in the home TV 612.
Step 9. NAF' 614 responds by requesting the media player to initiate bootstrapping.
Step 10. Media player 622 makes a request to the Java application 620 for a user identity. Note that as the network operator is not needed, so that the user identity in this bootstrapping procedure can be different from the user identity in the step 1. This user identity is the one that is agreed upon between the NAF 608 and the Java application 620.
Step 11. Media player 622 makes a request to BSF' to initiate bootstrapping using the user identity received from the Java application 620 in step 10.
Step 12. BSF' 610 in the home hub requests and receives an authentication vector AV' from NAF 608, which is now acting effectively as HSS'. This is equivalent to steps 406 to 412 in Figure 4.
Step 13. BSF' 610 authenticates the Java application in the standard manner as set out in steps 414 to 420 of Figure 4 based on a challenge response method, which also mirrors that of step 4, but uses the session key Ks as the base key for authentication instead of the initial shared secret key K. At the same time, a further session key Ks' is generated based on Ks at the Java application 620 as well as at BSF' 610. The generation of the further session keys are equivalent to steps 422 and 424 in Figure 4.
Step 14. BSF' 610 then passes Ks' to NAF' 614 in the home TV 612, potentially with a lifetime for the further session key Ks'. This is equivalent to step 426 in Figure 4.
Step 15. BSF' 610 may also send an OK message to the media player 622, potentially with a lifetime for the further session key, Ks'.
Step 16. Media player 622 retrieves Ks' from the Java application 620.
Step 17. NAF' 614, and thus the home TV 612, and the media player 622 now share the same session key Ks'.

Therefore, using the method outlined in the steps above, the media player and the home TV can be authenticated. Furthermore, a session key, Ks', is generated based on the existing session key Ks, for use between the home TV 612 and the media player 622. This session key Ks' can be used to encrypt and decrypt any data transmitted between the home TV 612 and the media player 622. However, if the media player is lost or stolen, or if the further session key Ks' is somehow compromised in some way, then there is still no need to go back to the network operator, and specifically the HSS/BSF of the network operator, for a session key, as new ones can be generated based on the first session key Ks as described in the examples above.

In the arrangement in Figure 6, the HSS 602 and BSF 604 can be considered as part of the user's home mobile/cellular network, which is also the network operator's network. The home hub 606 and the home TV 612 on the other hand can be considered as forming part of the user's home local area network, home Ethernet, home Wi-Fi or similar. Communication between the two different networks is provided by the broadband connection.

In summary, by adapting the method described in Figure 4, this example of the invention in Figure 6 provides for a session key Ks' to be shared between the media player 622 and the home TV 512, which can be used to encrypt communications over the otherwise non-secure Wi-Fi connection. The method has the advantage that it does not require the subscriber to manual input a matching set of keys at both the home hub 506 or the home TV 512 and the media player 522. Furthermore, even if the session key Ks' is compromised, a new one can easily be regenerated based on the first session key Ks. Furthermore, no request to HSS 102 is necessary once the first session key Ks has been determined so that a connection to the HSS over the broadband connection does not have to be open all the time.

The example described in Figure 6 can be considered from another perspective as an arrangement where authentication keys are generated in the mobile network and then transferred to the home network, so that the home network can use those keys to generate further session keys with which communications between devices in the home network can be secured.

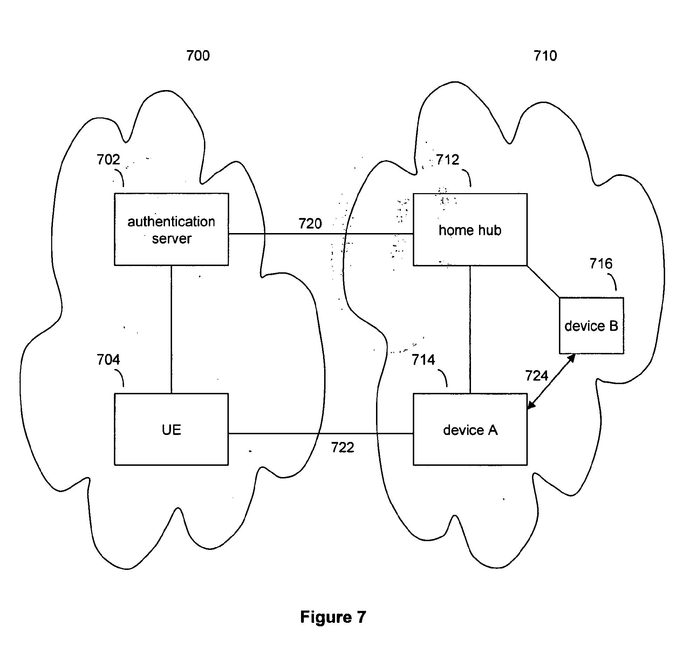

Figure 7 shows a more general network diagram of the arrangement in Figure 6, which highlights this further aspect of the invention where keys are exchanged and used between two differing network types. Figure 7 shows two different networks: a mobile cellular network 700 and a home network 710. The mobile network may be a 3G network as described above, or may be some other mobile cellular network such as a GSM network. The home network 710 is some other network that is not a mobile network, such as a Ethernet/WiFi type of network, or some other wireless fixed-line network.

The mobile network 700 is shown as comprising an authentication server 702 and a UE 704. The authentication server 702 is a simplified representation of the HSS 602 and BSF 604 shown in Figure 6. The authentication server 702 and the UE 704 form part of the mobile network 700.

The home hub 606, the home TV 612 and the media player 622 of Figure 6 are now represented by the home hub 712, device B 716 and device A 714 respectively for the sake of simplicity. The home hub 712, device B 716 and device A 714 all form part of the home network 710. Within each of the entities in the home network reside the elements shown in Figure 6 in the equivalent entities, such as the NAF 608 and the BSF' 610 and so on. These elements have been omitted for simplicity. One important thing to note from Figure 7 is the separation of network types.

Communications between the two networks 700 and 710 are via communications links 720 and 722. Communications link 720 may be a broadband connection as described above or similar connection. Communications link 722 may be a wired connection, such as a USB connection or some other similar, preferably secure, connection. As described in Figure 6, device A 714 (the media player) and the UE 704 may be housed within the same physical unit and therefore be directly connected to each other. Alternatively, they may be connectable via a USB connection as described.

As the arrangement in Figure 7 is a generalisation of the arrangement of Figure 6, the processes described with reference to Figure 6 are applicable to the arrangement shown in Figure 7. However, Figure 7 better illustrates the separation of the network types. Therefore, by using the method described with reference to Figure 6, it is possible to generate keys in the mobile network and pass them onto the home network, where they can be used to generate further session keys for securing communications between entities in the home network, such as between device A and device B over communications link 724, which is typically a wireless link.

It should be noted that the further session keys could also be used to secure communications between device A 714 and the home hub 712. Once device A 714 and the home hub 712 or device B 716, have the further session keys, they can use this key as a basis for generating yet further session keys. Consequently, it is possible to have as many session keys generated in this manner for as many connections as needed between entities in the home network.

It should be noted that in the arrangement of Figure 7, it is possible for the generation of the initial session keys in the mobile network, which are transferred to the home network, to be generated by methods other than the recursive GAA process described earlier. For example, standard GSM style authentication and key generation could be used instead. However, once the session key is generated and transferred to the entities in the home network, the process of further key generation and secure communications follows that described with reference to Figure 6 above.

It will be appreciated by a person skilled in the art that that the invention can also operate with other devices instead of a media player or a home TV. Indeed, any device that requires authentication before allowing connection to the home hub either directly or to another element connected to the home hub, or that requires an easy to establish secure connection with the home hub can utilise this invention.

Also, other communications means can be used between the home hub and the multimedia player, not just a Wi-Fi connection. Indeed, any communications between the multimedia player and the home hub could be secured using the above method.

The above examples have been described with reference to a 3G environment, which includes intra-UMTS and UMTS-GSM. However, a person skilled in the art will appreciate that the methods can clearly be adopted by other types of communications network such as GSM, wireless LAN or the Internet.

It is noted herein that while the above describes examples of the invention, there are several variations and modifications which may be made to the described examples without departing from the scope of the present invention as defined in the appended claims. One skilled in the art will recognise modifications to the described examples.

## Claims

1. A method of key sharing between a mobile network (700) and a home network (710), wherein the mobile network comprises a first authentication entity (702) and a second authentication entity (704), and wherein the home network (710) comprises a first network entity (712) and a second network entity (714), the method comprising the steps of:
(i) directing a request for an encryption key from at least one network entity in the home network to the mobile network;
(ii) generating a first encryption key in the mobile network at the first authentication entity and separately generating a second encryption key at the second authentication entity, wherein the first and second generated encryption keys are identical;
(iii) providing the first network entity with a third encryption key derived from the first encryption key generated at the first authentication entity, and providing the second network entity with a fourth encryption key derived from the second encryption key generated at the second authentication entity, wherein the third encryption key at the first network entity and the fourth encryption key at the second network entity are identical.

2. A method according to claim 1 further comprising the step of using the third encryption key and fourth encryption key to secure communications between the first network entity and the second network entity within the home network.

3. A method according to claim 2, wherein the home network is a wireless network and the communications between the first network entity and the second network entity is over a wireless interface secured using the third and fourth encryption key.

4. A method according to any preceding claim, wherein the generating of the first and second encryption keys is based on a common secret held separately at both the first authentication entity and the second authentication entity.

5. A method according to claim 4, wherein the generating of the first and second encryption keys is further based on a seed shared between the first and second authentication entities, and the generating of the first and second encryption keys uses a predetermined key generation algorithm.

6. A method according to any preceding claim wherein the first authentication entity and second authentication entity are associated with the mobile network, and the first network entity and the second network entity are associated with the home network.

7. A method according to any preceding claim, wherein the third encryption key is derived by the first authentication server and the fourth encryption key is derived by the second authentication entity.

8. A method according to any preceding claim, wherein the first network entity is a router or a device connected to a router.

9. A method according to any preceding claim, wherein the first authentication entity comprises a home subscriber server and the second authentication entity comprises a mobile terminal.
